Europäisches Patentamt

European Patent Office

Office européen des brevets

(19)

(11) Veröffentlichungsnummer: **0 033 764**
**A1**

## (12) EUROPÄISCHE PATENTANMELDUNG

(21) Anmeldenummer: 80106998.0

(22) Anmeldetag: 13.11.80

(51) Int. Cl.³: **F 16 B 31/02**, F 16 M 11/04

(30) Priorität: 06.02.80 DE 3004227

(43) Veröffentlichungstag der Anmeldung: **19.08.81**
**Patentblatt 81/33**

(84) Benannte Vertragsstaaten: **AT BE CH FR GB IT LI LU NL SE**

(71) Anmelder: **Rollei-Werke Franke & Heidecke GmbH + Co KG, Salzdahlumer Strasse 196, D-3300 Braunschweig (DE)**

(72) Erfinder: **Hartung, Hansjürgen, Jahnstrasse 27, D-3340 Wolfenbüttel (DE)**

(74) Vertreter: **Gramm, Werner, Dipl.-Ing. et al, Patentanwälte Gramm + Lins Theodor-Heuss-Strasse 2, D-3300 Braunschweig (DE)**

(54) Schraubenverbindungen.

(57) Die Schraubeinrichtung umfaßt einen Schraubbolzen (10), der mit einer ihn antreibenden Scheibe (50) über eine Kupplung (40) verbunden ist, die in Anzugsrichtung oberhalb eines Grenzmoments freigebend, in Lösungsrichtung dagegen starr verbindend ausgebildet ist. Die antreibende Scheibe (50) weist zweckmäßigerweise kreisringförmig angeordnete Ausnehmungen (96) auf, und der Schraubbolzen (10) ist drehfest mit einem Teil (40) verbunden, welches im Reibungseingriff mit der Scheibe (50) steht und welches über der Kreisringfläche (90) bzw. den Kreisringflächen der Ausnehmung (96) angeordnete, schräg gegen die Scheibe (50) ausgerichtete und elastisch gegen sie vorgespannte Vorsprünge (64, 64') aufweist. Diese Schraubeinrichtung dient allgemein zur Begrenzung des Anzugsdrehmomentes. Sie eignet sich insbesondere zur Verbindung eines Selfwinders mit einer Kamera oder zur Befestigung einer Kamera auf einem Stativgewinde, wobei durch die erfindungsgemäße Schraubeinrichtung sichergestellt ist, daß die Schraubverbindung weder zu fest noch zu locker ist.

0033764

ROLLEI - WERKE

Franke & Heidecke

GmbH & Co. KG

12.11.1980

A 1201 EU

Schraubverbindungen

Die Erfindung betrifft Schraubverbindungen.

Schraubverbindungen sollen weder zu lose noch zu fest sein. Ist zum Beispiel eine Kamera nur lose auf ein Stativ aufgeschraubt, so können die Aufnahmen verwackeln. Zu lose Verbindungen können sich auch ungewollt lösen, besonders wenn rotierende Teile miteinander verschraubt sind. Andererseits besteht bei zu fest angezogenen Schraubverbindungen die Gefahr, daß beim Lösen dieser Verbindungen eines oder mehrere Teile beschädigt werden, insbesondere bei relativ kleinen und leichten Gegenständen wie Kameras.

Aufgabe der Erfindung ist es, eine Einrichtung zu schaffen, mit welcher auch der Ungeübte Schraubverbindungen mit der gewünschten Festigkeit anzieht.

Diese Aufgabe ist gemäß der Erfindung gelöst durch eine Schraubeinrichtung, welche einen Schraubbolzen umfaßt, der mit einer ihn antreibenden Scheibe über eine Kupplung verbunden ist, die in Anzugsrichtung oberhalb eines Grenzmoments freigebend, in Lösungsrichtung dagegen starr verbindend ausgebildet ist.

Die Erfindung weist den Vorteil auf, daß stets die gewünschte Festigkeit der Schraubverbindung hergestellt wird, sofern die den Schraubbolzen antreibende Scheibe nur so weit gedreht wird, bis die Kupplung die Verbindung mit dem Schraubbolzen mindestens kurzfristig freigegeben hat.

Ein weiterer Vorteil der Erfindung liegt darin, daß sie sowohl für sehr große als auch für sehr kleine Schraubverbindungen anwendbar ist.

Darüberhinaus bringt die Erfindung des weiteren erheblichen Vorteil, daß die Schraubverbindung mit dem gewünschten Anzugsmoment ohne irgendwelche Werkzeuge herstellbar ist.

Eine bevorzugte Weiterbildung der Erfindung ist dadurch gekennzeichnet, daß die antreibende Scheibe kreisringförmig angeordnete Ausnehmungen aufweist, und daß der Schraubbolzen drehfest mit einem Teil verbunden ist, welches im Reibungseingriff mit der Scheibe steht und welches über der Kreisringfläche bzw. den Kreisringflächen der Ausnehmungen angeordnete, schräg gegen die Scheibe ausgerichtete und elastisch gegen sie vorgespannte Vorsprünge aufweist.

Eine Schraubeinrichtung gemäß dieser Weiterbildung der Erfindung eignet sich insbesondere zur Verbindung von Kameras mit einem Selfwinder oder zur Befestigung von Kameras auf einem Stativ. Kameras werden bekanntlich auch von Leuten benutzt, die eine ausgesprochene Abneigung gegen alles Technische haben, keinerlei Fingerspitzengefühl besitzen und an die oben beschriebene Problematik zu loser und zu fester Schraubverbindungen auch nicht einen Gedanken zu verwenden bereit sind. Andererseits sind Kameras leichte Geräte, bei denen überdimensionierte Schraubenbefestigungen nicht nur wegen der Verteuerung der Herstellungskosten sondern auch wegen der damit eintretenden Erhöhung des Gesamtgewichts nicht erwünscht sind, weder vom Hersteller noch vom Kunden. Mit der beschriebenen Schraubeinrichtung jedoch wird jeder technisch völlig Unbegabte eine Befestigung der Kamera so vornehmen, daß sowohl ein zu loser als auch ein zu fester Sitz vermieden wird. Damit wird ein Verziehen bzw. eine andere Beschädigung des Kamerakörpfers vermieden. Gleichzeitig wird eine einwandfreie Lösbarkeit dieser Schraubverbindung gewährleistet, da die Vorsprünge, auch wenn sie bei Beginn des Lösungsvorgangs zwischen den Ausnehmungen an der antreibenden Scheibe anliegen, bereits nach einer kurzen Relativbewegung zwischen ihnen und der Scheibe in die Ausnehmungen hineingleiten, aus denen sie beim Lösungsvorgang nicht herausgedrückt werden können; diese Verbindung ist beim Lösungsvorgang völlig starr.

Beim Anziehen der Schraubverbindung dagegen wird durch Drehen des antreibenden Rades, wegen dessen Reibungseingriff mit dem die Vorsprünge aufweisenden Teil, der Schraubbolzen angetrieben und in die Kamera hineingeschraubt.Wenn ein vorbestimmtes Anzugsmoment erreicht ist, werden die Vorsprünge, weil sie schräg zur Scheibe ausgerichtet sind, durch den Druck der anliegenden Kanten der Ausnehmungen aus diesen herausgedrückt und die bis dahin antreibende Scheibe rutscht, unter Überwindung des Reibungsmomentes, durch, während das die Vorsprünge aufweisende Teil und der drehfest mit ihm verbundene Schraubbolzen in ihrer Lage verharren.

Das drehfest mit dem Schraubbolzen verbundene Teil ist zweckmäßigerweise flach ausgebildet. Diese Weiterbildung der Erfindung
bringt den Vorteil einer kompakten Bauweise.

Vorteilhafterweise kann das drehfest mit
dem Schraubbolzen verbundene Teil ein Loch
aufweisen, welches mindestens einen nichtrunden Umfangsabschnitt aufweist, und ein
durch die antreibende Scheibe vorstehender
Zapfen des Schraubbolzens steckt in diesem
Loch, wobei an dem nichtrunden Umfangsabschnitt des Loches ein komplementär ausgebildeter Umfangsabschnitt anliegt. Durch
diese Ausbildung des Loches und durch die
zu dem nichtrunden Abschnitt des Loches
komplementäre Ausbildung des Umfangs des
Zapfens des Schraubbolzens wird eine drehfeste Verbindung mit diesem gewährleistet.
Das Loch des drehfesten Teils kann in
seinem gesamten Umfang komplementär zum
nichtrunden Umfang des Zapfens des Schraubbolzens ausgebildet sein.

Nach einer anderen Weiterbildung der Erfindung ist das drehfeste Teil mit einer
Schraube, welche in ein Gewinde in dem
Zapfen des Schraubbolzens eingeschraubt
ist, gegen diesen vorgespannt. Das flache
Teil kann hohl an der Scheibe anliegend
ausgebildet sein. Ferner kann die kleine
Schraube, welche das flache Teil gegen die antreibende Scheibe drückt, einen Anschlag aufweisen, oder sie kann so viel länger als die Tiefe des Schraubgewindes in dem Zapfen ausgebildet sein, daß der Druck des flachen Teils gegen die antreibende Scheibe einen Maximalwert nicht überschreitet. Auf diese Weise wird gleichzeitig das Reibungsmoment zwischen der antreibenden Scheibe und dem flachen Teil definiert, nach dessen Überschreitung die Scheibe weiterdreht, ohne das elastische Teil und damit den Schraubbolzen hereinzutreiben.

Das flache Teil kann einen oder mehrere elastische Arme aufweisen, deren Enden in Richtung auf die antreibende Scheibe abgekröpft sind. Nach einer bevorzugten Ausführungsform der Erfindung weist das elastische, flache Teil einen in Bezug auf die Kreisringfläche der Ausnehmungen diagonalen Abschnitt auf, von dessen Enden sich die Arme etwa in Richtung der Kreisringfläche erstrecken. Durch Dimensionierung des Durchmessers der Kreisringfläche der Ausnehmungen und durch Dimensionierung der Länge der Arme kann das gewünschte Grenzmoment eingestellt werden.

Die erfindungsgemäße Schraubeinrichtung kann als Adapter zum Aufsatz auf einen Stativschraubbolzen ausgebildet sein, sie kann

0033764

aber auch Teil eines Stativs sein.

Nach einer anderen Weiterbildung der Erfindung weist der Schraubbolzen einen mittleren Abschnitt auf, welcher gegen ein Herausfallen aus einer Ausnehmung einer Platte, z.B. eines Kamerastativs, gesichert ist.

Die antreibende Scheibe kann rund und an ihrem Umfang geriffelt sein. Diese Scheibe kann auch eine Vertiefung aufweisen, in welcher das flache elastische Teil angeordnet ist.

Weitere Vorteile und Merkmale der Erfindung gehen aus den Unteransprüchen in Verbindung mit der Beschreibung und der Zeichnung hervor. In letzterer zeigen:

Fig. 1    einen Schnitt durch eine erfindungsgemäße Schraubeinrichtung,

Fig. 2    einen Schnitt längs der Linie 2-2 der Fig. 1,

Fig. 3    eine Draufsicht auf das flache elastische Kupplungsteil,

Fig. 4    eine Seitenansicht des flachen elastischen Kupplungsteils,

Fig. 5    eine Draufsicht auf die antreibende Scheibe und

Fig. 6    eine Draufsicht auf einen Teil einer Stativplatte.

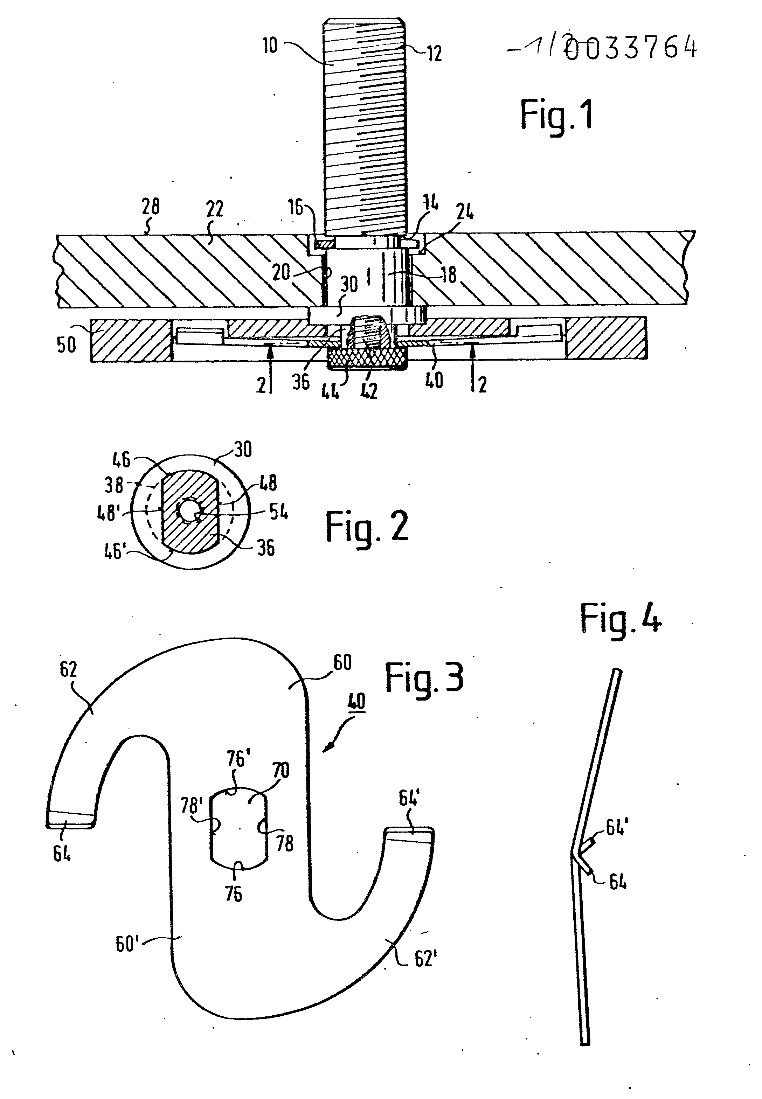

In der Figur 1 sieht man einen Schraubbolzen 10, welcher an seinem oberen Abschnitt ein Außengewinde 12 aufweist. Dieser, das Gewinde 12 aufweisende Teil des Schraubbolzens 10 ist so bemessen, daß er in die Stativschraube von Kameras hineingeschraubt werden kann.

In seinem mittleren Bereich weist der Schraubbolzen 10 eine umlaufende Nut 14 auf, in welcher eine Sicherungsscheibe 16 befestigt ist. Der Zapfen 18 des Schraubbolzens 10 erstreckt sich durch ein Loch 20 einer Stativplatte 22 hindurch. Diese Stativplatte 22 weist in ihrem oberen Bereich eine umlaufende Vertiefung 24 auf, welche die Sicherungsscheibe 16 vollständig aufnimmt, sodaß diese sich unterhalb der dem Schraubgewindeteil 12 zugewandten Oberfläche 28 der Stativplatte befindet. Die Sicherungsscheibe 16 verhindert, daß der Schraubbolzen 10 nach unten aus der Stativplatte 22 herausfällt.

Der Zapfen 18 des Schraubbolzens 10 weist unterhalb der Stativplatte einen umlaufenden Flansch 30 auf, welcher beim Anziehen des Schraubbolzens 10 die Stativplatte gegen die Kameraunterseite drängt. Unterhalb dieses Flansches 30 ist der Zapfen 18 nur noch an zwei einander gegenüber liegenden Abschnitten rund ausgebildet, während die Enden der jeweils gegenüber liegenden Rundungen gradlinig miteinander verbunden sind, wie es in Figur 2 dargestellt ist. Dieser unterste Abschnitt 36 steckt in einem Loch 38 des flachen elastischen Teils, welches komplementär zum Querschnitt dieses untersten Zapfenabschnittes ausgebildet ist. Das flache elastische Teil 40 ist durch eine kleine Schraube 42, deren Kopf 44 allseitig über den Umfang des untersten Abschnitts 36 des Zapfens 18 vorsteht, gegen die Unterseite der antreibenden Scheibe 50 vorgespannt, sodaß beide im Reibungseingriff miteinander stehen.

In der Figur 2, welche einen Schnitt längs der Linie 2-2 und unter Weglassung des elastischen Teils 40 zeigt, sieht man den Umfang 38 eines runden Loches in der antreibenden Scheibe 50. Innerhalb dieses Umfangs sieht man eine Draufsicht von unten auf den unteren Abschnitt 36 des Zapfens 18. Dieser Umfang weist zwei kreisförmige Abschnitte 46 und 46' und zwei ebene Abschnitte 48 und 48' auf. Ferner sieht man in dieser Figur 2 ein Schraubgewindeloch 54, in welches die Schraube 42 einschraubbar ist.

Die Figur 3 zeigt eine Draufsicht auf das flache elastische Teil 40. Dieses weist zwei miteinander ausgerichtete diagonale Abschnitte 60 und 60' auf, von denen etwa in Richtung der Kreisringfläche der Ausnehnehmungen der antreibenden Scheibe Arme 62 bzw. 62' ausgehen, welche in ihren Endbereichen zur antreibenden Scheibe hin abgekröpfte Abschnitte 64 bzw. 64' aufweisen.

In dieser Figur 3 sieht man auch, daß das Loch 70 in dem elastischen Teil 40 komplementär zum Umfang des untersten Abschnitts 36 des Zapfens 18 des Schraubbolzens 10 ausgebildet ist. Auch dieses Loch weist zwei kreisförmige Abschnitte 76 und 76' und zwei ebene Abschnitte 78 und 78' auf.

Die Figur 4 zeigt eine Seitenansicht des elastischen Teils 40. In dieser Figur 4 sieht man zum einen, daß das elastische Teil 40 hohl an der antreibenden Scheibe anliegend ausgebildet ist. Ferner sieht man in dieser Figur 4 die abgekröpften Enden 64 und 64' der in Richtung der Kreisringflächen der noch zu beschreibenden Ausnehmungen der antreibenden Scheibe 80.

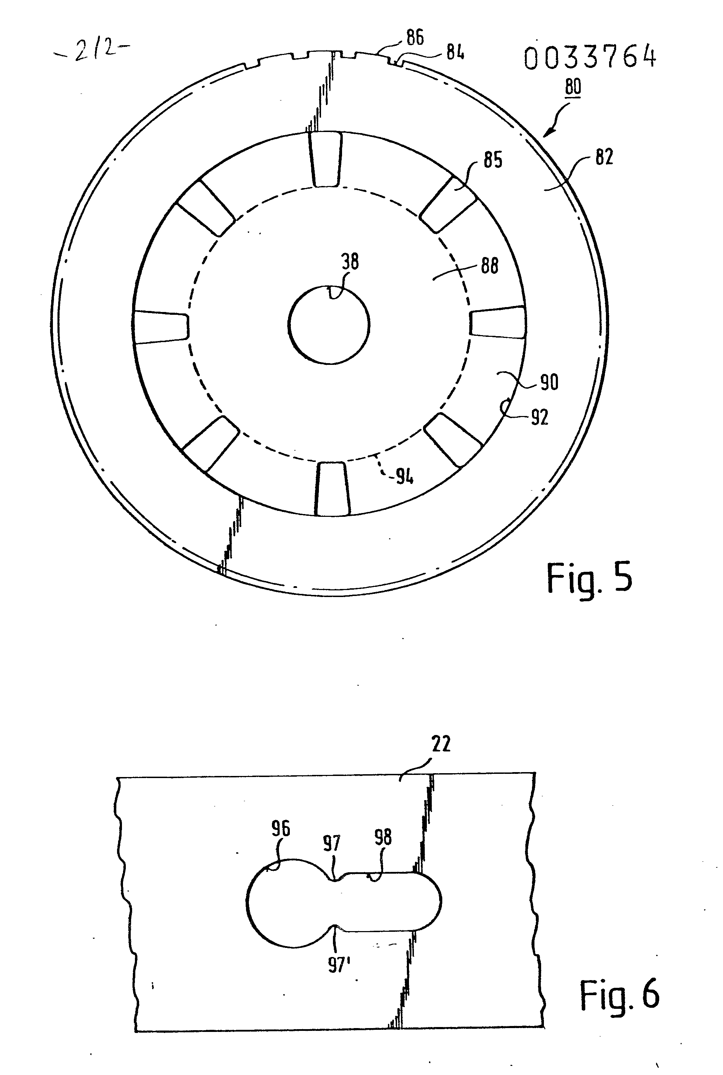

Diese antreibende Scheibe 80 ist in Figur 5 dargestellt. Sie weist einen äußeren Ringabschnitt 82 auf, welcher an seinem Außenumfang Vertiefungen 84 und Erhebungen 86 aufweist, welche seine Griffigkeit erhöhen. Innerhalb des Randabschnittes 82 der antreibenden Scheibe 80 befindet sich eine kreisringförmige Vertiefung 88, in welcher das elastische Teil 40 (in Figur 5 nicht dargestellt) liegt. Auf einer Kreisringfläche 90, welche durch den Kreis 92 und durch die gestrichelte Linie 94 begrenzt ist, sind acht Ausnehmungen 96 vorgesehen. Ferner sieht man in dieser Figur 5 das zentrale Loch 38, durch welches der untere Zapfenabschnitt 36 vorsteht; dieser Zapfenabschnitt ist in dieser Figur nicht dargestellt.

In zusammengesetztem Zustand liegt das elastische Teil 40 in der Vertiefung 88, innerhalb der Linie 92. Die abgekröpften Enden 64 und 64' des elastischen Teils sind der antreibenden Scheibe 80 zugewandt und werden durch den Druck des Kopfes 44 der Schraube 42 gegen die antreibende Scheibe 80 vorgespannt.

Wenn die antreibende Scheibe sich gegen die Abkröpfrichtung der Enden 64 bzw. 64' relativ zum elastischen Teil 40 bewegt, werden die abgeköpften Enden 64 und 64', sobald sie über Ausnehmungen 66 liegen, aufgrund der Vorspannung in diese hineingedrückt werden. Wenn die antreibende Scheibe sich weiter relativ zu dem elastischen Teil 40 bewegt, werden die abgekröpften Enden 64 und 64' mit den gegenüber liegenden Kanten der Ausnehmungen 96 zum Eingriff kommen, wodurch die Enden 64 und 64' noch weiter in die Ausnehmung hineingedrückt werden. Beim Lösen der Schraubverbindung rastet das elastische Teil 40 somit in eine starre Verbindung mit der antreibenden Scheibe 80 ein.

Wird dagegen die antreibende Scheibe in Anzugsrichtung gedreht, so dreht sie auch das elastische Teil 40, und zwar aufgrund des Reibungseingriffes mit diesem. Mit dem elastischen Teil 40 wird auch der drehfest mit ihm verbundene Schraubbolzen 10 gedreht. Wenn aufgrund dieser Schraubverbindung die Kamera mit ihrer Unterseite immer stärker gegen die Oberseite 28 der Stativplatte 22 gedrückt wird , erreicht das Anzugsmoment einen Wert, welcher größer ist als das Reibmoment zwischen antreibender Scheibe 80 und dem elastischen Teil 40. Bei Erreichung dieses momenten Gleichgewichtes, drücken die Kanten der Ausnehmungen 96 die abgeköpften Enden 64 und 64' heraus, und die antreibende Scheibe gleitet unter dem elastischen Teil 40 durch, ohne dieses weiter anzutreiben. Auf diese Weise ist das Anzugsdrehmoment, mit welchem der Schraubbolzen 10 in die Kamera hineingeschraubt werden kann, begrenzt.

In der Figur 5 sieht man eine Draufsicht auf einen Teil einer Stativplatte 22, welche ein kreisförmiges Loch 96 aufweist, das zur rechten Seite hin in ein Langloch 98 übergeht. Der Durchmesser des Loches ist größer als der Aussenumfang des Gewindes 12 des Schraubbolzens 10; letzterer kann somit von unten durch die Stativplatte 22 hindurch geschoben werden. Das Loch 96 geht nach rechts in ein Langloch 98 über. Der Durchmesser dieses Langloches 98 ist so bemessen, daß der von unten in die Stativplatte 22 eingeführte Schraubbolzen 10 mit seinem Nutenabschnitt 14 in das Langloch 98 hineingeschoben werden kann. Oberhalb und unterhalb der Stativplatte 22 ist der Schraubbolzen 10 breiter als der Durchmesser des Langlochs 98 ausgebildet, sodaß er in der Stativplatte arretiert ist. Lippen 97 und 97', welche aus dem Material der Stativplatte 22 herausgedrückt sein können, verhindern, daß der Schraubbolzen 10 ungewollt nach links in das Loch 96 verschoben wird, aus welchem er herausfallen könnte.

0033764

ROLLEI-WERKE
Franke & Heidecke
GmbH & Co. KG

12.11.1980
A 1201 EU

Ansprüche

1. Schraubeinrichtung, dadurch gekennzeichnet, daß ein Schraubbolzen (10) mit einer ihn antreibenden Scheibe (50) über eine Kupplung (40) verbunden ist, die in Anzugsrichtung oberhalb eines Grenzmoments freigebend, in Lösungsrichtung dagegen starr verbindend ausgebildet ist.

2. Schraubverbindung nach Anspruch 1, dadurch gekennzeichnet, daß die antreibende Scheibe (50) kreisringförmig angeordnete Ausnehmungen (96) aufweist, und daß der Schraubbolzen (10) drehfest mit einem Teil (40) verbunden ist, welches im Reibungseingriff mit der Scheibe (40) steht und welches über der Kreisringfläche (90) bzw. den Kreisringflächen der Ausnehmungen (96) angeordnete, schräg gegen die Scheibe (40) ausgerichtete und elastisch gegen sie vorgespannte Vorsprünge (64,64') aufweist.

3. Vorrichtung nach Anspruch 1 oder 2, dadurch gekennzeichnet, daß das drehfest mit dem Schraubbolzen (10) verbundene Teil (40) flach ausgebildet ist.

4. Vorrichtung nach einem der Ansprüche 1 bis 3, dadurch gekennzeichnet, daß das drehfest mit dem Schraubbolzen (10) verbundene Teil (40) ein Loch (70) aufweist, welches mindestens einen nichtrunden Umfangsabschnitt (78, 78') aufweist, und daß ein durch die antreibende Scheibe (40) vorstehender Zapfenabschnitt (36) des Schraubbolzens (10 ) in diesem Loch (70) steckt und an dem nichtrunden Umfangsabschnitt (78, 78') mit einem komplementär ausgebildeten Umfangsabschnitt (48, 48') anliegt.

5. Vorrichtung nach einem der Ansprüche 1 bis 4, dadurch gekennzeichnet, daß das Loch (70) des drehfesten Teils (40) komplementär zum nichtrunden Umfang des Zapfens (36) des Schraubbolzens (10) ausgebildet ist.

6. Vorrichtung nach einem der Ansprüche 1 bis 5, dadurch gekennzeichnet, daß das drehfeste Teil (40) mit einer Schraube (42), welche in ein Gewinde des Zapfens (18) des Schraubbolzens (10) eingeschraubt ist, gegen diesen vorgespannt ist.

7. Vorrichtung nach einem der Ansprüche 1 bis 6, dadurch gekennzeichnet, daß das flache Teil (40) hohl an der Scheibe (80) anliegend ausgebildet ist.

8. Vorrichtung nach einem der Ansprüche 1 bis 7, dadurch gekennzeichnet, daß das flache Teil einen oder mehrere Arme aufweist, deren Enden in Richtung auf die antreibende Scheibe abgekröpft sind.

9. Vorrichtung nach einem der Ansprüche 1 bis 8, dadurch gekennzeichnet, daß das elastische Teil einen in Bezug auf die Kreisringfläche der Ausnehmungen diagonalen Abschnitt aufweist, von dessen Enden sich die Arme etwa in Richtung der Kreisringfläche erstrecken.

10. Vorrichtung nach einem der Ansprüche 1 bis 9, dadurch gekennzeichnet, daß die Schraubeinrichtung als Adapter zum Aufsatz auf einen Stativschraubbolzen ausgebildet ist.

**Fig.1**

**Fig. 2**

**Fig.4**

**Fig.3**

0033764

Fig. 5

Fig. 6

## EINSCHLÄGIGE DOKUMENTE

| Kategorie | Kennzeichnung des Dokuments mit Angabe, soweit erforderlich, der maßgeblichen Teile | betrifft Anspruch |
|---|---|---|
| | DE - A - 2 352 400 (ELCO)<br>+ Gesamt +<br>-- | 1,2 |
| | US - A - 4 176 582 (WITTE)<br>+ Fig. 2; Zusammenfassung +<br>-- , | 1,2 |
| | US - A - 3 709 087 (STONE)<br>+ Fig. 2,4 +<br>-- | 1-9 |
| | US - A - 3 664 226 (GONZALEZ)<br>+ Fig. 4-6 +<br>-- | 1-9 |
| | US - A - 3 504 591 (CHRISTOPHER-SEN)<br>+ Gesamt +<br>-- | 1 |
| | GB - A - 1 491 192 (ILLINOIS)<br>+ Fig. 10, 11 +<br>& DE-A1-2 502 644<br>---- | 1 . |

**KLASSIFIKATION DER ANMELDUNG (Int. Cl.3)**

F 16 B 31/02
F 16 M 11/04

**RECHERCHIERTE SACHGEBIETE (Int. Cl.3)**

F 16 B 31/00
F 16 M 11/00

**KATEGORIE DER GENANNTEN DOKUMENTE**

X: von besonderer Bedeutung
A: technologischer Hintergrund
O: nichtschriftliche Offenbarung
P: Zwischenliteratur
T: der Erfindung zugrunde liegende Theorien oder Grundsätze
E: kollidierende Anmeldung
D: in der Anmeldung angeführtes Dokument
L: aus andern Gründen angeführtes Dokument
&: Mitglied der gleichen Patentfamilie, übereinstimmendes Dokument

| X | Der vorliegende Recherchenbericht wurde für alle Patentansprüche erstellt. |
|---|---|

| Recherchenort | Abschlußdatum der Recherche | Prüfer |
|---|---|---|
| WIEN | 08- 05-1981 | SCHMIDT |

EPA form 1503.1  06.78